(19) Europäisches Patentamt
European Patent Office
Office européen des brevets

(11) **EP 1 794 552 B1**

(12) **EUROPÄISCHE PATENTSCHRIFT**

(45) Veröffentlichungstag und Bekanntmachung des Hinweises auf die Patenterteilung:
**07.12.2011 Patentblatt 2011/49**

(21) Anmeldenummer: **05789597.1**

(22) Anmeldetag: **13.09.2005**

(51) Int Cl.:
***G01F 25/00*** (2006.01)     ***G01F 23/26*** (2006.01)

(86) Internationale Anmeldenummer:
**PCT/EP2005/054540**

(87) Internationale Veröffentlichungsnummer:
**WO 2006/034959 (06.04.2006 Gazette 2006/14)**

(54) **FERTIGUNGSSEITIGES ABGLEICHEN EINES MESSGERÄTS ZUR KAPAZITIVEN FÜLLSTANDSMESSUNG**

IN-PRODUCTION CALIBRATION OF A MEASURING DEVICE FOR A CAPACITIVE LEVEL MEASUREMENT

REGLAGE, AU NIVEAU DE LA FABRICATION, D'UN APPAREIL DE MESURE POUR UNE MESURE DE NIVEAU CAPACITIVE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **28.09.2004 DE 102004047413**

(43) Veröffentlichungstag der Anmeldung:
**13.06.2007 Patentblatt 2007/24**

(73) Patentinhaber: **Endress + Hauser GmbH + Co. KG 79689 Maulburg (DE)**

(72) Erfinder:
• **GETMAN, Igor 79539 Lörrach (DE)**
• **DIETERLE, Roland 79588 Efringen-Kirchen (DE)**

• **UPPENKAMP, Kaj D-79664 Wehr (DE)**
• **WERNET, Armin 79618 Rheinfelden (DE)**

(74) Vertreter: **Andres, Angelika Maria Endress+Hauser (Deutschland) AG+Co. KG PatServe Colmarer Strasse 6 79576 Weil am Rhein (DE)**

(56) Entgegenhaltungen:
**BE-A- 567 234         DE-A1- 10 161 069
DE-A1- 10 322 279    DE-A1-102004 008 125
DE-B- 1 275 777       US-A- 5 088 325
US-A- 5 245 873**

**Beschreibung**

Die Erfindung bezieht sich auf ein Verfahren zum fertigungsseitigen Abgleichen eines Messgerätes zur kapazitiven Füllstandsmessung eines Mediums, wobei mindestens eine Sondeneinheit des Messgerätes mit einem elektrischen Ansteuersignal angesteuert wird, bei welchem es sich um eine elektrische Wechselspannung mit einer vorgebbaren Frequenz handelt. Weiterhin bezieht sich die Erfindung auf ein entsprechendes Messgerät. Fertigungsseitig bedeutet, dass der Abgleich bei der Fertigung oder der Produktion des Messgerätes beim Hersteller stattfindet.

Das kapazitive Messverfahren erlaubt eine kontinuierliche Messung des Füllstandes. Dabei bilden eine Sondeneinheit und die Behälterwand (oder eine zweite Sondeneinheit) einen Kondensator, dessen Dielektrikum das Medium in dem Behälter ist. Die Kapazität dieses Kondensators ist dabei u.a. vom Füllstand des Mediums abhängig, so dass aus der Kapazität auf den Füllstand geschlossen werden kann. Die unterschiedlichen Möglichkeiten zur Messung der Kapazität lassen sich beispielsweise den Offenlegungsschriften DE 101 57 762 A1 oder DE 101 61 069 A1 der Anmelderin entnehmen.

Problematisch ist, dass die gemessene Kapazität nicht nur vom Füllstand, sondern auch von der Dielektrizitätskonstante und der Leitfähigkeit des Mediums abhängig ist. Da die Leitfähigkeit z.B. von der Temperatur oder der Luftfeuchtigkeit beeinflusst wird, führen diese Abhängigkeiten zu Messunsicherheiten bzw. Beschränkungen in Hinsicht auf die Anwendung. Weiterhin haben auch die Geometrie des Behälters und z.B. Ansatz an der Sondeneinheit Auswirkungen auf die gemessenen Werte.

Eine weitere Problematik liegt durch die multiple Abhängigkeit von den beteiligten Größen in der Zuordnung zwischen dem aus der Messung bestimmten Kapazitätswert und dem zugeordneten und eigentlich interessierenden Füllstandswert. Daher ist üblicherweise ein sog. Abgleich erforderlich, bei welchem nach dem Einbau des Messgerätes mit dem zu messenden Medium unterschiedliche Füllstände angefahren und die sich dabei ergebenden Kapazitätswerte abgespeichert werden. Ein solcher Abgleich ist jedoch sehr aufwendig und verhindert eine direkte Inbetriebnahme des Messgerätes nach dem Einbau.

US 5,245,873 offenbart ein Verfahren zum fertigungsseitigen Abgleichen eines Messgerätes zur kapazitiven Füllstandsmessung eines Mediums, wobei mindestens eine Sondeneinheit des Messgerätes mit einem elektrischen Ansteuersignal angesteuert wird, bei welchem es sich um eine elektrische Wechselspannung mit einer vorgebbaren Frequenz handelt.

DE 101 61 069, DE 1 275 777 und DE 10 2004 008 125 offenbaren auch ähnliche Verfahren.

In diesen Dokumenten ist die Abhängigkeit der Messung von der Leitfähigkeit des Mediums bekannt. In diesen Dokumenten wird diese Abhängigkeit aber durch verschiedene Messverfahren und Berechnungsalgorithmen kompensiert, oder die Einrichtungen können regelmäßigerweise abgeglichen werden. Um diese Abhängigkeit zu verringern werden auch höhere Frequenzen verwendet.

Die Aufgabe der Erfindung ist es daher, ein Verfahren zum fertigungsseitigen Abgleichen eines Messgerätes zur kapazitiven Fullstandsmessung anzugeben.

Die Erfindung löst die Aufgabe in Bezug auf das Verfahren dadurch, dass in Abhängigkeit von der Frequenz des Ansteuersignals ein Leitfähigkeitsbereich bestimmt wird, innerhalb dessen die Füllstandsmessung im Wesentlichen unabhängig von einer Änderung der elektrischer Leitfähigkeit des Mediums ist, dass für den Leitfähigkeitsbereich mindestens eine erste Referenzzuordnung zwischen einem vorgebbaren ersten Füllstandswert und einem zum ersten Füllstandswert gehörigen ersten Kapazitätswert erzeugt wird, und dass die erste Referenzzuordnung zwischen dem ersten Füllstandswert und dem ersten Kapazitätswert abgelegt wird.

Ein Messgerät zur kapazitiven Füllstandsmessung besteht üblicherweise aus einer Sondeneinheit, welche von einer Regel-/Auswerteeinheit mit einem elektrischen Ansteuersignal angesteuert wird, bei dem es sich um eine elektrische Wechselspannung einer vorgebbaren Frequenz handelt. Dies ist die übliche Ausgestaltung für das Ansteuersignal bei einem kapazitiven Messgerät. Als Antwortsignal ergibt sich damit üblicherweise ein Stromsignal, welches z.B. über einen Widerstand in ein digitalisierbares Spannungssignal umgewandelt wird. Aus dem elektrischen Antwortsignal der Sondeneinheit, welches somit auch das von der Kapazität des aus Sondeneinheit, Behälterwand (oder zweiter Sondeneinheit) und Medium gebildeten Kondensators abhängige Antwortsignal des Kondensators ist, wird dann der Kapazitätswert bestimmt. Dafür ist ein Berechnungsalgorithmus erforderlich, der z.B. die Admittanz des Antwortsignals, dessen Betrag, und die Phase zwischen Ansteuer- und Antwortsignal auswertet. Dafür ist beispielsweise ein Mikroprozessor in der Regel-/Auswerteeinheit vorgesehen. Das Ansteuersignal ist üblicherweise eine elektrische Wechselspannung einer einstellbaren Frequenz. Die Fertigung dieser Bestandteile des Messgerätes entsprechen dem Stand der Technik.

Die Erfindung besteht nun darin, dass bei der Fertigung/Herstellung/Produktion des Messgerätes mindestens eine Referenzzuordnung zwischen einem ersten einstellbaren Füllstandswert und dem damit verbundenen Kapazitätswert erzeugt wird. Bei der Fertigong/Herstellung des Messgerätes wird also bereits ein Abgleich ausgeführt. Die unterschiedlichen Möglichkeiten zur Erzeugung einer solchen Referenzzuordnung werden in den folgenden Ausgestaltungen diskutiert. Die entscheidende Komponente, dass ein solcher Vorabgleich möglich bzw. dass er für die spätere Anwendung verwendbar ist, besteht darin, dass die Leitfähigkeit des Mediums, in welchem das Messgerät angewendet werden soll, innerhalb eines vorgegebenen Leitfähigkeitsbereiches liegt. Der Anwendungsbereich wird also eingeschränkt auf Medien mit entsprechenden Leitfähigkeiten. Dieser Bereich ist allgemein nach oben hin offen, also unbegrenzt. Der Anfang des Bereichs hängt u.a. von der Frequenz des Ansteuersignals (meist eine elektrische Wechselspannung) ab. Bei einer Frequenz von 250 kHz liegt der Anfang beispielsweise bei ca. 150 μS. Bei einer höheren Frequenz würde dieser Anfangswert höher, bzw. bei einer niedrigeren Frequenz tiefer liegen. Aufgrund dieser Frequenzabhängigkeit muss auch zunächst für die gegebene Frequenz der passende Leitfähigkeitsbereich, z.B. durch Vergleichsmessungen bestimmt werden. In den folgenden Ausgestaltungen wird eine Möglichkeit aufgezeigt werden, wie dieser Bereich in Richtung tieferer Leitwerte erweitert werden kann.

Grundlage für diese Einschränkung ist, dass sich gezeigt hat, dass Mediumseigenschaften wie die Leitfähigkeit, aber auch die Dielektrizitätskonstante kaum Einfluss auf das Messsignal haben, wenn eine Leitfähigkeit vorliegt, die innerhalb des angesprochenen Bereichs liegt. Da somit also die Mediumsabhängigkeit aufgehoben ist, kann ein Abgleich bei der Fertigung vorgenommen werden. Somit ist dann auch eine Messung direkt nach dem Einbau mit einem solchen Messgerät möglich.

Die Erfindung lässt sich also wie folgt zusammenfassen: Indem der Anwendungsbereich auf Medien mit einer Leitfähigkeit oberhalb eines bestimmten Wertes beschränkt wird, ist ein Abgleich bei der Fertigung möglich. Oder umgekehrt: Das Messgerät wird mit dem fertigungsseitigen Vorabgleich nur bei solchen Medien eingesetzt, deren Leitfähigkeit in den Bereich fallen.

Eine Variante des Verfahrens sieht vor, dass mindestens eine zweite Referenzzuordnung zwischen einem zweiten vorgebbaren Füllstandswert und einem zum zweiten Füllstandswert gehörigen zweiten Kapazitätswert erzeugt wird, und dass die zweite Referenzzuordnung zwischen dem zweiten Füllstandswert und dem zweiten Kapazitätswert abgelegt wird. Wird nur eine Referenzzuordnung abgespeichert, so ist die Unterscheidung zwischen dem Unter- und Überschreiten des damit verbundenen Füllstandes möglich. Zwei Werte erlauben jedoch das Erkennen von diesen beiden Werten und es ist auch möglich, Zwischenwerte zu berechnen und zu bestimmen.

Eine Ausgestaltung des erfindungsgemäßen Verfahrens sieht vor, dass die Frequenz des Ansteuersignals derartig vorgegeben wird, dass eine Auswirkung eines Ansatzes an der Sondeneinheit auf die Füllstandsmessung minimal ist. Diese Ausgestaltung bezieht sich darauf, dass die Ansatzempfindlichkeit von der Frequenz des Absteuersignals abhängig ist, wobei eine höhere Frequenz eine höherer Ansatzverträglichkeit mit sich bringt. Eine höhere Frequenz ist jedoch mit einem höheren Energiebedarf verbunden und weiterhin wird der untere Grenzwert für den Leitfähigkeitsbereich, innerhalb dessen eine Änderung des Leitwerts keine oder nur vernachlässigbare Auswirkungen auf den bestimmten Kapazitätswert hat, in Richtung höherer Leitwerte verschoben. Von daher ist eine höhere Ansatzverträglichkeit mit einem verkleinerten Anwendungsbereich verbunden. Daher ist die Frequenz so zu wählen, dass die Auswirkungen des Ansatzes minimal sind, aber dass gleichzeitig der Leitfähigkeitsbereich möglichst groß ist. Praktisch muss also ein Kompromiss zwischen diesen beiden gegenläufigen Anforderungen gefunden werden.

Die folgenden Ausgestaltungen befassen sich mit der Art, wie bei der Fertigung die Referenzzuordnungen erzeugt werden:

Eine Ausgestaltung des erfindungsgemäßen Verfahrens beinhaltet, dass mindestens eine Referenzzuordnung zwischen einem vorgegebenen Füllstandswert und einem zu dem Füllstandswert gehörigen Kapazitätswert dadurch erzeugt wird, dass ein Abgleichsmedium derartig gewählt oder eingestellt wird, dass die elektrische Leitfähigkeit des Abgleichsmediums innerhalb des bestimmten Leitfähigkeitsbereichs liegt, dass in einem Abgleichsbehälter der Füllstandswert mit dem Abgleichsmediums eingestellt wird, und dass bei dem eingestellten Füllstandswert mit dem Messgerät der Kapazitätswert bestimmt wird. Bei der Fertigung werden also Abgleichsmessungen durchgeführt. Das Abgleichsmedium muss sich dabei nur dadurch auszeichnen, dass die Leitfähigkeit innerhalb des angegebenen Leitfähigkeitsbereichs liegt. Vorteilhafterweise wird ein leicht handhabbares und insbesondere auch ungefährliches Abgleichsmedium, z.B. Wasser verwendet. Mit diesem Abgleichsmedium wird dann in dem Abgleichsbehälter, dessen Geometrie möglichst optimal gewählt wurde, der vorgegebene Füllstandswert eingestellt und der sich damit ergebende Kapazitätswert wird bestimmt. Eine solche Abgleichsmessung hat auch den Vorteil, dass damit auf Fertigungstoleranzen des Messgerätes und speziell der Sondeneinheit eingegangen werden kann, da die Auswirkungen der Geometrie der Sondeneinheit direkt mitgemessen werden.

Eine Ausgestaltung des erfindungsgemäßen Verfahrens sieht vor, dass mindestens eine Referenzzuordnung zwischen einem vorgegebenen Füllstandswert und einem zu dem Füllstandswert gehörigen Kapazitätswert dadurch erzeugt wird, dass der Kapazitätswert berechnet wird, welcher dem Füllstandwert des Mediums zugeordnet ist. Bei der Berechnung ist ggf. noch auf die Geometrie und die Materialeigenschaften der Sondeneinheit zu achten. Unter Geometrie seien allgemein die betreffenden Abmessungen wie Länge, Durchmesser etc. verstanden, aber auch ob es sich um eine isolierte Sondeneinheit handelt und wie die jeweiligen Einzelabmessungen sind. Die Materialeigenschaft der Sondeneinheit sind beispielsweise deren Leitfähigkeitswert, deren Dielektrizitätskonstante usw. Sind alle nötigen Daten über Geometrien und Materialeigenschaften bekannt, so lässt sich der Kapazitätswert berechnen, der mit einem vorgegebenen Füllstandswert verbunden ist. Ggf. wird der Kapazitätswert auch unter Beachtung der Geometrie des Behälters, in welchem das Messgerät angewendet werden soll, berechnet.

Der Kapazitätswert bei Leerabgleich (die Sondeneinheit ist also nicht von einem Medium bedeckt) ergibt sich im Fall einer Stabsonde z.B. mit folgender Formel (dies ist also ein Beispiel für die Berechnungsformel; je nach der Ausgestaltung des Messgerätes und auch des Behälters sind passende Modifikationen erforderlich):

$$Kapazität_{Leer} = \cfrac{1}{\cfrac{1}{\cfrac{2 \cdot \pi \cdot \varepsilon_{iso} \cdot \varepsilon_0 \cdot Sondenlänge}{\ln\left(\cfrac{durchmesser_{iso}}{durchmesser_{stab}}\right)} + \cfrac{1}{\cfrac{2 \cdot \pi \cdot \varepsilon_0 \cdot Sondenlänge}{\ln\left(\cfrac{Behälterdurchmesser}{durchmesser_{iso}}\right)}}} + Grundkapazität$$

Dabei müssen die Sondenlänge *Sondenlänge,* der Durchmesser des Stabes *durchmesser_{stab}* und der Durchmesser der den Stab umgebenden Isolierung *durchmesser_{iso},* sowie die Dielektrizitätskonstante der Isolierung $\varepsilon_{iso}$ bekannt sein. Weiterhin ist der Durchmesser des Behälters *Behälterdurchmesser* erforderlich. Bei dem Behälter sollte es sich vorzugsweise um einen prismenförmigen Behälter- d.h. die Querschnittsfläche ist konstant über die gesamte Höhe - handeln, da sonst entsprechende Linearisierungsberechnungen erforderlich sind. Die Grundkapazität *Grundkapazität* ist die Kapazität, die das Messgerät als Ganzes bereits mitbringt. Die Grundkapazität ist somit die Summe der Kapazitäten, die am Sondenanschluss der Regel-/Auswerteeinheit messbar sind. Dieser Wert lässt sich z.B. aus Vergleichsmessungen bestimmen (mehr dazu bei der Beschreibung der Abbildungen weiter unten).

Ein zweiter Wert für die vollständige Bedeckung der Sondeneinheit mit Medium ergibt sich über folgende Gleichung:

$$Kapazität_{voll} = \cfrac{1}{\cfrac{1}{\cfrac{2 \cdot \pi \cdot \varepsilon_{iso} \cdot \varepsilon_0 \cdot Sondenlänge}{\ln\left(\cfrac{durchmesser_{iso}}{durchmesser_{stab}}\right)} + \cfrac{1}{\cfrac{2 \cdot \pi \cdot \varepsilon_{Medium} \cdot \varepsilon_0 \cdot Sondenlänge}{\ln\left(\cfrac{Behälterdurchmesser}{durchmesser_{iso}}\right)}}} + Grundkapazität$$

Bei dieser Formel kommt also noch die Dielektrizitätskonstante des Mediums hinzu: $\varepsilon_{Medium}$. Änderungen der Dielektrizitätskonstanten des Mediums: $\varepsilon_{Medium}$ haben dabei einen vernachlässigbaren Einfluss. Besteht die Sondeneinheit aus einem eigentlichen Sondenstab und einer ihn umgebenden Sondenisolation, so lässt sich dies wie folgt erklären: Das System, welches aus der Sondeneinheit, dem Behälter und dem Medium gebildet wird, lässt sich interpretieren als zwei Kondensatoren, die in Reihe geschaltet sind: ein Kondensator Ci zwischen Sondenstab und Medium, bei welchem die Sondenisolation das Dielektrikum bildet, und der andere Kondensator Cm zwischen Sondenisolation und Behälterwand, bei welchem das Medium das Dielektrikum bildet. Bei dem gegebenen und für die Erfindung wesentlichen Leitfähigkeitsbereich ist der Leitfähigkeitswert des Mediums viel größer als der Blindleitwert des "Mediumskondensators" Cm. Somit ist der Mediumskondensator nahezu kurzgeschlossen und zwischen dem Sondenstab und der Behälterwand besteht quasi allein der "Isolationskondensator" Ci, wodurch auch die Abhängigkeit von der Dielektrizitätskonstante des Mediums: $\varepsilon_{Medium}$ für diesen Bereich der Leitfähigkeit, in welcher das Messgerät angewendet werden soll, entfällt.

Eine Ausgestaltung des erfindungsgemäßen Verfahrens sieht vor, dass mindestens eine Referenzzuordnung zwischen einem vorgegebenen Füllstandswert und einem zu dem Füllstandswert gehörigen Kapazitätswert dadurch erzeugt wird, dass aus berechneten und/oder bestimmten Zuordnungen zwischen Füllstandswerten und Kapazitätswerten der Kapazitätswert entnommen wird, welcher dem Füllstandswert zugeordnet ist. Es werden also berechnete oder gemessenen Zuordnungen abgelegt und die dem gewählten Füllstand zugehörige Kapazität wird diesen entnommen bzw. davon ausgehend werden die Referenzzuordnungen z.B. für die gegebene Sondenlänge berechnet. Wie oben bei der Berechnung zu sehen, ist ggf. noch die Geometrie des Behälters zu berücksichtigen.

Eine Weiterführung ist, dass in dem Fall, dass zwei Referenzzuordnungen erzeugt worden sind, mit den hinterlegten ersten und zweiten Referenzzuordnungen mindestens eine dritte Referenzzuordnung berechnet und beispielsweise in einer Speichereinheit abgelegt wird. Anhand der bekannten Referenzzuordnungen werden also Zwischenwerte berechnet. Dafür ist z.B. eine erleichternde Bedingung, wenn der Zusammenhang zwischen Füllstand und Kapazität linear ist.

Weiterhin wird ein Messgerät zur kapazitiven Füllstandsmessung, beschrieben welches nach dem erfindungsgemäßen Verfahren in mindestens einem der vorhergehenden Ausgestaltungen abgeglichen ist. Ein solches Messgerät bestimmt üblicherweise den Füllstand eines Mediums mit einer Leitfähigkeit in einem Behälter. Es weist üblicherweise mindestens eine Sondeneinheit und mindestens eine Regel-/Auswerteeinheit auf. Die Regel-/Auswerteeinheit steuert die Sondeneinheit mit einem elektrischen Ansteuersignal an und empfängt von der Sondeneinheit ein elektrisches Antwortsignal. In der Regel-/Auswerteeinheit ist mindestens ein Berechnungsalgorithmus hinterlegt, über welchen die Regel-/Auswerteeinheit aus dem Antwortsignal der Sondeneinheit einen Kapazitätswert bestimmt. In mindestens einer Speichereinheit ist nach dem erfindungsgemäßen Verfahren mindestens eine Referenzzuordnung zwischen einem Kapazitätswert und einem Füllstandswert abgelegt. Das Messgerät ist nach dem Einbau in dem Behälter in dem Fall abgleichsfrei, dass die elektrische Leitfähigkeit des Mediums innerhalb eines vorgegebenen Leitfähigkeitsbereichs liegt. Das Messgerät verfügt also über eine Speichereinheit, in welcher mindestens eine Referenzzuordnung zwischen Kapazitätswert und Füllstandswert bei der Fertigung abgelegt worden ist. Somit ist mit diesem Messgerät sogleich nach dem Einbau in den Behälter eine abgleichsfreie Messung möglich, wenn die Leitfähigkeit des zu messenden Mediums innerhalb des vorgegebenen Leitfähigkeitsbereichs liegt, für welchen der Vorabgleich bei der Fertigung stattgefunden hat. Dabei ist jedoch auf die Frequenz des Ansteuersignals zu achten, bei welchem es sich üblicherweise um eine elektrische Wechselspannung handelt. Die Frequenz hat Auswirkungen sowohl auf den Leitfähigkeitsbereich, innerhalb dessen der Leitfähigkeitswert des zu messenden Mediums liegen darf, damit das Messgerät die abgelegten Referenzzuordnungen nutzen kann, als auch auf die Ansatzverträglichkeit des Messgerätes. Der letzte Punkt wird im Folgenden noch diskutiert werden. Für die Vergrößerung des zulässigen Leitfähigkeitsbereichs ist dabei eine möglichst kleine Frequenz, aber für die Ansatzverträglichkeit eine möglichst hohe Frequenz sinnvoll. Abgleichsfreiheit des Messgerätes bedeutet somit, dass für die Messungen kein Abgleich mehr im eingebauten Zustand durchgeführt werden muss. Das Messgerät kann also direkt nach dem Einbau verwendet werden und die Mühen und Kosten des Abgleichs vor Ort entfallen. Eine Ausgestaltung des beschriebenen Messgeräts sieht vor, dass mindestens eine Regel-/Auswerteeinheit vorgesehen ist, welche von der Sondeneinheit ein elektrisches Antwortsignal empfängt, und dass in der Regel-/Auswerteeinheit mindestens ein Berechnungsalgorithmus hinterlegt ist, über welchen die Regel-/Auswerteeinheit mindestens anhand der Amplitude und der Phase des Antwortsignals der Sondeneinheit einen Kapazitätswert bestimmt. Die Regel-/Auswerteeinheit steuert weiterhin meist auch die Sondeneinheit mit dem Ansteuersignal an. Üblicherweise wird nur der Betrag des Antwortsignals ausgewertet. Werden jedoch auch Amplitude und Phase relativ zum Ansteuersignal des Antwortsignals verwendet, so ergibt sich mehr Information. Hierfür ist beispielsweise ein Mikroprozessor in der Regel-/Auswerteeinheit vorgesehen, welches das Messsignal oder eine dazu proportionale Größe direkt abtastet. Üblicherweise wird das Antwortsignal, bei dem es sich meist um ein Stromsignal handelt, z.B. über einen Widerstand in ein Spannungssignal übertragen, welches wiederum digitalisiert wird und somit optimal der Auswertung zugänglich gemacht worden ist. Diese Digitalisierung und damit die Auswertung z.B. nicht nur des Betrages des Antwortsignals ist vor allem für die folgende Ausgestaltung wichtig.

Eine Ausgestaltung des beschriebenen Messgeräts beinhaltet, dass der Berechnungsalgorithmus derartig optimiert ist, dass sich ein erweiterter Leitfähigkeitsbereich ergibt, innerhalb dessen die Füllstandsmessung im Wesentlichen unabhängig von einer Änderung der elektrischer Leitfähigkeit des Mediums ist. Der Berechnungsalgorithmus ist also mit anderen Worten derartig optimiert, dass eine Auswirkung der Leitfähigkeit des Mediums innerhalb des erweiterten Leitfähigkeitsbereichs auf den von der Regel-/Auswerteeinheit bestimmten Kapazitätswert minimal ist, wobei dieser Bereich größer als der Bereich ist, der bereits durch das Messprinzip und die "Physik" vorgegeben ist. Das Ziel dieser Ausgestaltung ist, dass der Mediums-Bereich, für welchen das abgleichsfreie Messgerät anwendbar ist, durch die Art der Auswertung möglichst groß ist. Hierfür lassen sich beispielsweise die Koeffizienten eines Polynoms derartig bestimmen, dass sich ein gewünschter Verlauf des Polynoms in Abhängigkeit von der Leitfähigkeit ergibt. Dabei ist jedoch stets auch die Abhängigkeit von der Frequenz des Ansteuersignals zu beachten.

So lässt sich beispielsweise eine korrigierte Amplitude *Amplitude*$_{Berechnet}$ ausgehend von der gemessenen Amplitude *Amplitude*$_{Gemessen}$ und der gemessenen Phase $\varphi_{gemessen}$ des Antwortsignals mit einer Funktion (dies ergibt dann den optimierbaren Berechnungsalgorithmus, der in diesem Fall eine Berechnungsformel ist), die beispielsweise ein Polynom ist, anpassen:

$$Amplitude_{Berechnet} = f(Amplitude_{Gemessen}, \varphi_{max}, \varphi_{gemessen})$$

In der Formel sind entsprechende Koeffizienten vorzusehen, mit denen die Funktion an die Bedingungen angepasst werden kann. Prinzipiell sollte $\varphi_{max} = \pi/2$ sein, da die Phasenverschiebung zwischen dem Spannungs- und dem Stromsignal beim Kondensator grundlegend diesen Wert einnimmt. Aufgrund der Elektronik sind jedoch Abweichungen von diesem Wert möglich, so dass es sinnvoller ist, den Winkel $\varphi_{max}$ variabel zu halten. Durch die Koeffizienten lässt sich dann der Ausdruck so optimieren, dass die Unabhängigkeit vom Leitwert für einen möglichst großen Bereich gegeben ist. Da diese Unabhängigkeit im Bereich höherer Leitwerte prinzipiell gegeben ist, ist insbesondere das Ziel, den unteren Wert für den Bereich möglichst zu erniedrigen, so dass sich dadurch wiederum auch die Anwendungsbandbreite des Messgerätes erhöht. Einzelne Koeffizienten können weiterhin vorgesehen sein, um die Phaseninformationen $\varphi_{max}$ und $\varphi_{gemessen}$ unterschiedlich zu bewerten.

Eine Ausgestaltung des beschriebenen Messgerätes beinhaltet, dass die Regel-/Auswerteeinheit die Phase des Antwortsignals in Hinsicht auf einen an der Sondeneinheit befindlichen Ansatz auswertet. Hinter dieser Ausgestaltung steht die Erkenntnis, dass nicht nur das Material via Füllstand Auswirkungen auf die Phase des Antwortsignals hat, sondern dass der Ansatz sich ebenfalls auf die Phase auswirkt. Somit ist es also möglich, dass ein Ansatz einen negativen Einfluss auf die Bestimmung des Kapazitätswerts und damit auch auf die Ermittlung des Füllstandswerts hat. Es gilt also, die Effekte von Ansatz zu erkennen und möglichst zu minimieren. Eine Möglichkeit besteht darin, die Frequenz des Ansteuersignals, welches üblicherweise eine elektrische Wechselspannung ist, zu erhöhen. Dadurch wird die Ansatzempfindlichkeit verringert. Eine weitere Möglichkeit ergibt sich durch die Beobachtung, dass die Phase des Antwortsignals durch eine Änderung des Füllstandes nur innerhalb eines von Mediumseigenschaften und der Frequenz des Ansteuersignals abhängigen Phasenbereichs liegen kann. Ergibt sich eine Phase außerhalb des Bereichs, so ist der Ansatz dominant und eine zuverlässige Füllstandsmessung ist nicht ohne weiteres möglich. Daher lässt sich aus der Phase Information über den Ansatz gewinnen.

Eine vorteilhafte Ausgestaltung des beschriebenen Messgeräts sieht vor, dass die Regel-/Auswerteeinheit über den Berechnungsalgorithmus aus dem Antwortsignal der Sondeneinheit unter Verwendung der Phase des Antwortsignals den Kapazitätswert in dem Fall bestimmt, dass die Phase außerhalb eines vorgebbaren ansatzdominanten Phasenbereiches liegt, wobei der ansatzdominante Phasenbereich die Phasen umfasst, die nur in dem Fall messbar sind, dass ein Ansatz an der Sondeneinheit vorhanden ist. Die Idee dieser Ausgestaltung ist, dass der Kapazitätswert und darüber der Füllstandswert nur dann über den optimierten Berechnungsalgorithmus bestimmt wird, wenn die Phase in einem Bereich liegt, in welchem sie bedingt durch den Füllstand liegen kann. Alternativ lässt sich auch die Phasendifferenz zwischen der gemessenen Phase und der maximalen Phase von 90° betrachten. Ist eine Phase ermittelt worden, die außerhalb dieses Bereiches bzw. innerhalb des ansatzdominanten Phasenbereichs liegt, so ist sie primär Folge des Ansatzes und eine Anwendung des optimierten Berechnungsalgorithmus, der vorzugsweise die Phase zur Auswertung hinzunimmt, ist nicht mehr ohne Weiteres sinnvoll. Der "erlaubte" Phasenbereich lässt sich jedoch auch entsprechend der gewünschten oder erforderten Messsicherheit einstellen und vorgeben, wobei ein erhöhter Sicherheitsbedarf mit einem kleineren Phasenbereich assoziiert sein wird.

Eine Ausgestaltung beinhaltet, dass die Regel-/Auswerteeinheit über den Berechnungsalgorithmus aus dem Antwortsignal der Sondeneinheit unter Verwendung eines vorgegebenen Phasenwerts den Kapazitätswert in dem Fall bestimmt, dass die Phase des Antwortsignals innerhalb des ansatzdominanten Phasenbereichs liegt. Ist die Phase größer, d.h. ist die Phase innerhalb des ansatzdominanten Phasenbereichs, so ist der Ansatz dominant, weshalb es nicht sinnvoll ist, direkt mit dem optimierten Berechnungsalgorithmus zu rechnen. Daher ist eine Korrektur erforderlich. Diese Korrektur ist insbesondere, dass die gemessene Phase nicht verwendet wird, sondern eine spezielle vorgegebene Phase. Alternativ ist ein zweiter Berechnungsalgorithmus vorgegeben, welcher die Abhängigkeit von der Phase vermindert. In einer Ausgestaltung handelt es sich bei der vorgegebenen Phase, die in diesen Fällen anstelle der gemessenen verwendet wird, um die maximale Phasendifferenz, die zwischen der gemessenen Phase und der maximalen/idealen Phase von 90° liegen darf. Ist also die Phasendifferenz größer als ein Grenzwert für die Phase, so wird anschließend der Kapazitätswert mit diesem Grenzwert berechnet.

Weiter wird ein Messgerät zur kapazitiven Füllstandsmessung eines Mediums mit einer Leitfähigkeit in einem Behälter beschrieben, mit mindestens einer Sondeneinheit, und mit mindestens einer Regel-/Auswerteeinheit, welche die Sondeneinheit mit einem elektrischen Ansteuersignal ansteuert, und welche von der Sondeneinheit ein elektrisches Antwortsignal empfängt, wobei in der Regel-/Auswerteeinheit mindestens ein Berechnungsalgorithmus abgelegt ist, über welchen die Regel-/Auswerteeinheit aus dem Antwortsignal der Sondeneinheit einen Kapazitätswert bestimmt. Das erfindungsgemäße Messgerät ist dadurch gekennzeichnet, dass der Berechnungsalgorithmus derartig optimiert ist, dass sich ein Leitfähigkeitsbereich ergibt, innerhalb dessen die Füllstandsmessung im Wesentlichen unabhängig von einer Änderung der elektrischer Leitfähigkeit des Mediums ist, und dass die Regel-/Auswerteeinheit derartig ausgestaltet ist, dass sie die Phase des Antwortsignals in Hinsicht auf einen an der Sondeneinheit befindlichen Ansatz auswertet. Mit einem solchen Messgerät ist es möglich, dass bereits bei der Fertigung mindestens eine Zuordnung zwischen Kapazitätswert und Füllstand bestimmt und passend im Messgerät abgelegt wird. Es handelt sich also um ein abgleichbares Messgerät Dies geht darauf zurück, dass die Abhängigkeit der Messung von der Leitfähigkeit des Mediums und damit vom Medium selbst aufgehoben bzw. minimiert wird. Da der Berechnungsalgorithmus optimiert ist, ist der Anwendungsbereich des Messgerätes wieder möglichst groß. Aufgrund der Auswertung der Phase ist es weiterhin möglich, dass einer Messunsicherheit durch Auswirkungen des Ansatzes an der Sondeneinheit begegnet wird. Da die Phase vorzugsweise beim optimierten Berechnungsalgorithmus zur Bestimmung des Kapazitätswerts herangezogen wird, sollte sichergestellt sein, dass die Phase nicht primär durch andere Prozessbedingungen beeinflusst wird. Eine solche Prozessbedingung ist beispielsweise der Ansatz des Mediums an der Sondeneinheit. Da Ansatz Auswirkungen auf die Phase hat, wird diese vorzugsweise in Hinsicht auf den Ansatz überwacht. Der Abgleich kann also nach dem oben beschriebenen Abgleichsverfahren auf der Herstellungsseite erfolgen, kann jedoch auch vor Ort nach dem Einbau vorgenommen werden. Die anderen Ausgestaltungen bzgl. des weiter oben beschriebenen Messgerätes gelten entsprechend auch hier.

Die Erfindung wird anhand der nachfolgenden Zeichnungen näher erläutert. Es zeigt:

Fig. 1: eine schematische Darstellung einer Anwendung eines beschriebenen Messgerätes.

Fig. 2: mehrere Kurven zur Verdeutlichung der Abhängigkeit des Messsignals von der Leitfähigkeit und der Dielektrizitätskonstanten des gemessenen Mediums,

Fig. 3: eine Darstellung schematischer Ergebnisse einiger Messungen zur Erzeugung der Zuordnung zwischen Kapazitätswert und Füllstand,

Fig. 4: Kurven zur Verdeutlichung der Optimierung des Auswertealgorithmus,

Fig. 5: eine schematische Darstellung der Abhängigkeit der Phase des Antwortsignals vom Füllstand, und

Fig. 6: eine schematische Darstellung eines gemessenen Abgleichs bei der Fertigung.

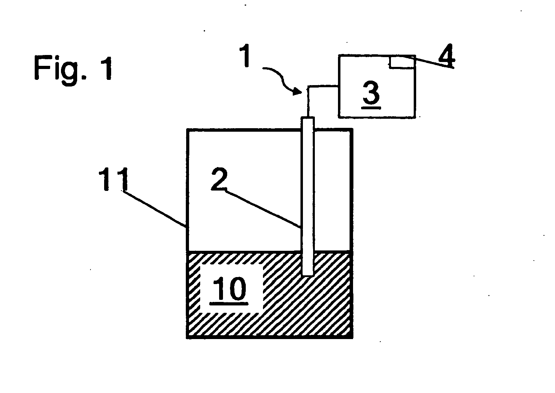

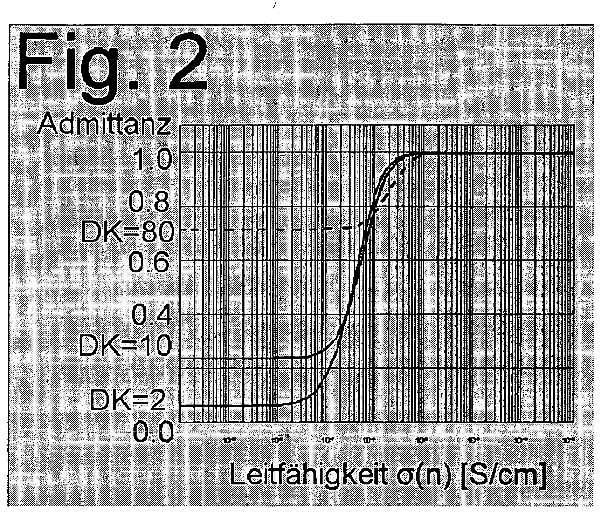

Fig. 1 zeigt eine Anwendung des Messgerätes 1 zur Messung des Füllstandes eines Mediums 10 in einem Behälter 11. Die Sondeneinheit 2 ist hier ein Stab, alternativ kann es sich jedoch auch um ein Seil handeln. Es gibt auch Anordnungen mit mehreren Messstäben bzw. -seilen. Die Sondeneinheit 2, die Wand des Behälters 11 und das Medium 10 bilden einen Kondensator. Zur Bestimmung der Kapazität wird die Sondeneinheit 2 von der Regel-/Auswerteeinheit 3 mit einem elektrischen Ansteuersignal beaufschlagt. Üblicherweise handelt es sich um eine elektrische Wechselspannung. Aus dem Antwortsignal der Sondeneinheit 2, dabei handelt es sich meist um ein Stromsignal, welches in der Regel-/Auswerteeinheit 3 in eine Spannung umgewandelt wird, wird dann die Kapazität bestimmt. Vorteilhafterweise ist dafür in der Regel-/Auswerteeinheit 3 zunächst eine Einheit zur Digitalisierung des Spannungssignals vorgesehen (hier nicht dargestellt), welche auch die Bestimmung von Amplitude und Phase des Antwortsignals erlaubt. Vorteilhafterweise kann ein Mikroprozessor in der Regel-/Auswerteeinheit vorgesehen sein, welcher das Antwortsignal (Stromsignal) oder ein dazu proportionales Signal (Spannungssignal) direkt abtastet oder digitalisiert. Aus den Werten des Antwortsignals wird dann der Kapazitätswert bestimmt. Über die Referenzzuordnung zwischen Kapazitätswert und Füllstandswert, welche in der Speichereinheit 4 hinterlegt ist, ergibt sich daraus der Füllstand des Mediums 10 im Behälter 11, insofern die Leitfähigkeit σ des Mediums 10 innerhalb des vorgegeben Leitfähigkeitsbereichs liegt. Dieser Bereich beginnt bei ca. 150 μS (dies gilt, wenn die Messfrequenz, d.h. wenn die Frequenz der Wechselspannung 250 kHz beträgt) und ist nach oben hin offen (vgl. hierzu die folgende Abbildung Fig. 2). Dies ist bereits allein durch die Physik gegeben. Der untere Grenzwert lässt sich jedoch, wie im Folgenden noch gezeigt werden wird, verkleinern.

Die Fig. 2 zeigt unterschiedliche Kurven bzgl. der Auswirkungen der Leitfähigkeit σ (aufgetragen auf der x-Achse) und der Dielektrizitäskonstanten (die einzelnen Kurven; DK = 2, 10, 80) auf die gemessene Admittanz (also die Amplitude) des Antwortsignals (aufgetragen auf der y-Achse als normierte Admittanz). Die Admittanz müsste eigentlich bei allen Kurven gleich 1 sein. Die Abweichungen ergeben sich jedoch zunächst durch die Abhängigkeit von der Leitfähigkeit σ des Mediums. Wie zu sehen, wird die Admittanz in Richtung abnehmender Leitfähigkeit kleiner. Der Grad des Abfalls hängt von der Dielektrizitätskonstanten des Mediums ab. Es findet sich also eine Abhängigkeit von zwei Eigenschaften des Mediums: Leitfähigkeit und Dielektrizitätskonstante. Der Verlauf der Kurven ist dabei sehr ähnlich: Es bestehen zwei Plateaus, zwischen denen ein Übergangsbereich liegt. Das obere Plateau ist für alle Dielektrizitätskonstanten gleich, wohingegen das untere Plateau von der Dielektrizitätskonstanten abhängig ist. Wichtig ist somit die Erkenntnis, dass oberhalb einer gewissen Leitfähigkeit eine Unabhängigkeit von der Leitfähigkeit und auch von der Dielektrizitätskonstanten gegeben ist. Mit diesem Wissen wird es möglich, den Anwendungsbereich des Messgerätes auf die Medien einzuschränken, deren Leitfähigkeiten oberhalb dieses Grenzwertes liegen. Für diese Medien istes dann auch möglich, bei der Fertigung Referenzzuordnungen zwischen Kapazitätswert und Füllstand zu hinterlegen und später auch anzuwenden. Eine weitere Abhängigkeit der Kurven besteht von der Frequenz des Ansteuersignals (hier nicht dargestellt). Je niedriger die Frequenz ist, desto mehr wandert der Übergangsbereich nach links in Richtung niedriger Leitfähigkeitswerte. Der Bereich ist generell nach oben hin offen, der untere Anfangsbereich ist jedoch frequenzabhängig. Durch die Verminderung der Frequenz ließe sich also ebenfalls ein breiterer Anwendungsbereich erzielen. Dem steht jedoch die Problematik gegenüber, dass eine niedrigere Frequenz die Beeinflussung durch Ansatz an der Sondeneinheit erhöht. Bei Ansatz handelt es sich um Medium, das an der Sondeneinheit anhaftet und somit quasi die Sonde gegenüber dem Medium abschirmt. Da bei vielen Medien Ansatz auftritt, ist es daher vorteilhafter, die Frequenz möglichst so hoch zu wählen, dass eine hohe Ansatzverträglichkeit besteht.

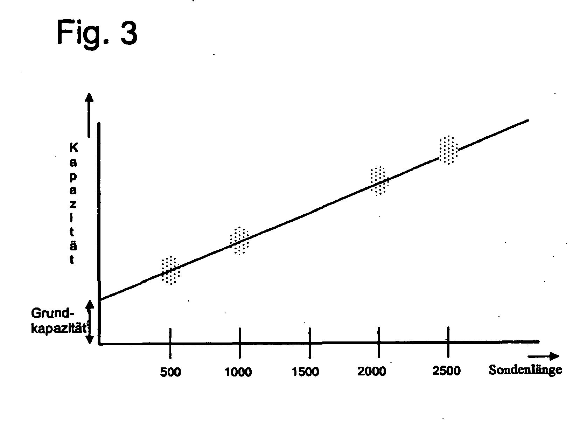

In der Fig. 3 ist das Ergebnis eines Verfahrens zur Erzeugung von Referenzzuordnungen dargestellt. Dabei sind die gemessenen Kapazitätswerte (y-Achse) mehrerer Sondeneinheiten bekannter Länge (aufgetragen auf der x-Achse) für den Leerabgleich in Luft - d.h. es befindet sich außer Luft kein Dielektrikum zwischen der Sondeneinheit und der Gegenelektrode - gemessen worden. Aufgrund z.B. von Fertigungstoleranzen ergibt sich für die jeweiligen Sondenlängen eine Punkteschar. Die Werte liegen jedoch generell auf einer Geraden, so dass auch Aussagen über Zwischengrößen der Sondenlängen möglich sind. Aus einer Extrapolation der gemessenen Werte lässt sich die Grundkapazität ermitteln, die von Sonde, Elektronik und Mechanik (z.B. Kabel, Durchführungen...) gebildet wird. Diese Grundkapazität ist der Kapazitätswert, dem der Nullabgleich zugeordnet wird, und über den die obigen Berechnungen möglich sind.

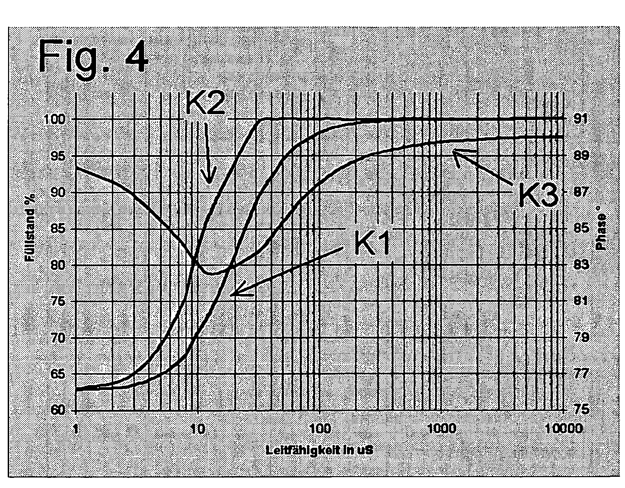

In der Fig. 4 sind drei Kurven K1, K2, K3 dargestellt. Zwei Kurven K1 und K2 zeigen die Auswirkung des Leitwerts des Mediums auf die Füllstandsbestimmung. Der Füllstand (aufgetragen auf der linken y-Achse) der zugrunde liegenden Messung liegt bei 100%. Aufgrund der Leitfähigkeit σ des Mediums (aufgetragen auf der x-Achse) ergeben sich jedoch unterschiedliche Kapazitätswerte, die zu jeweils anderen Füllstandswerten führen. Da jedoch die Leitfähigkeit üblicherweise im Betrieb nicht gemessen wird, da sie aber auch gleichzeitig von Einflüssen wie Temperatur und Luftfeuchtigkeit abhängt, bewirkt dies eine Messunsicherheit. Die Kurve K1 zeigt den Verlauf, der sich ergibt, wenn bei einem Medium nur die Amplitude des Antwortsignals ausgewertet ist. Obwohl der Füllstand 100% ist, würde der aus dem Kapazitätswert bestimmte Füllstand zwischen ca. 63% und 100% liegen, d.h. der Fehler bei der Füllstandsbestimmung kann bis zu 37% betragen. Wie in Fig. 2 zeigt die Kurve K1 im Wesentlichen zwei Plateaus, zwischen denen ein Übergangsbereich liegt. Wichtig ist nun, dass die Leitfähigkeit ab einem gewissen Wert einen vernachlässigbaren bzw. keinen Einfluss mehr auf die Messung hat (oberes Plateau). Damit ist verbunden, dass Referenzzuordnungen zwischen Kapazitätswert und Füllstand weitgehendst unabhängig vom Medium benutzt werden können. Hiermit dürfte auch die Idee der Erfindung deutlich werden. Dadurch, dass die Abhängigkeit vom Medium ab einer gewissen Leitfähigkeit (die wiederum von der Frequenz der elektrischen Wechselspannung des Ansteuersignals bedingt ist) wegfällt und dass dies auch für die meisten Dielektrizitätskonstanten (vgl. Fig. 2) zutrifft, ist es möglich, bereits bei der Fertigung Referenzzuordnungen zwischen Kapazitätswert und Füllstand zu hinterlegen.

Die Kurve K3 zeigt die Abhängigkeit der Phase (rechte y-Achse) des Antwortsignals relativ zur Phase des Ansteuersignals von der Leitfähigkeit σ. Wird der Kapazitätswert aus der Amplitude (K1) und der Phase (K3) des Antwortsignals bestimmt, so ist es möglich, den Auswertealgorithmus bzw. die Auswerteformel derartig zu optimieren, dass in Verbindung mit diesen beiden Informationen die Unabhängigkeit von der Leitfähigkeit auch für einen größeren Leitfähigkeitsbereich Gültigkeit besitzt. Dies ist durch die Kurve K2 dargestellt. Wie zu sehen, ist die Kurve K2 gegenüber der Kurve K1 mehr nach Links, also mehr in Richtung kleinerer Leitfähigkeiten verschoben. Der zulässige Leitfähigkeitsbereich beginnt hier bereits bei ca. 30 μS (bei einer Messfrequenz von 250 kHz). Somit wird auch der Anwendungsbereich des Messgerätes durch diese zusätzliche Optimierung vergrößert.

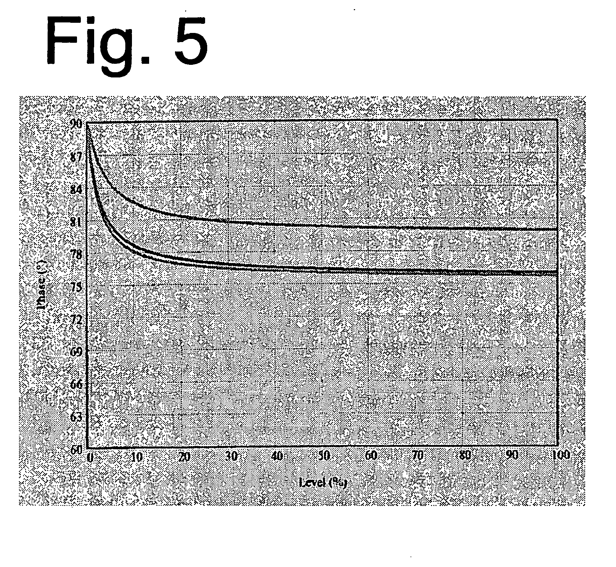

In der Fig. 5 sind drei Kurven dargestellt, die zu drei Medien gehören, deren Dielektrizitätskonstanten (von unten nach oben) 2,10 und 80 betragen. Die Leitfähigkeit ist 50 μS. Dargestellt ist die Abhängigkeit der Phase des Antwortsignals (y-Achse) vom Füllstand des Mediums (x-Achse, in Prozent). 90° ist die Phase, die sich ohne Medium (0%) einstellt. Dies ist die zu erwartende Phase, die sich an einem Kondensator zwischen Spannung und Strom ergibt. Bedingt durch die Ausgestaltung der einzelnen Bauteile des Messgerätes sind Abweichungen von diesen 90° zu erwarten, die sich jedoch direkt bestimmen lassen. Wie zu sehen, weicht die Phase des Antwortsignals stärker von diesem Wert ab, je mehr der Füllstand ansteigt, d.h. je mehr das Dielektrikum dieses Kondensators, der aus der Sondeneinheit und der Behälterwand oder einer zweiten Sondeneinheit gebildet wird, zunimmt. Der Verlauf der Kurve ist dabei abhängig von der Dielektrizitätskonstanten des Mediums. Je kleiner die Konstante, desto stärker ist der Abfall. Zu sehen ist jedoch auch, dass die Abweichung der Phase von 90° maximal 15° beträgt bzw. dass die Phase einen Wert kleiner 75° nicht einnimmt. Der Effekt des Füllstandes auf die Phase des Antwortsignals ist also auf einen Phasenbereich beschränkt. Damit das Messgerät nicht hierdurch wieder in eine Mediumsabhängigkeit gerät, ist es daher sinnvoll, diesen Bereich möglichst für alle Medien zu definieren, also für diesen Fall mit einer Frequenz des Ansteuersignal von 250 kHz auf eine Phase zwischen 75° und 90°. Eine alternative Formulierung ist, dass die Differenz der gemessenen Phase $\varphi_{gemessen}$ zu der maximalen Phase $\varphi_{max}$ nur zwischen 0° und 15° liegen darf. Liegt die Phase innerhalb diesen Bereichs, so können der Füllstand und ein Ansatz an der Sondeneinheit ursächlich dafür verantwortlich sein. Ist die Phase jedoch kleiner als 75° bzw. ist die Abweichung größer als 15°, so ist der Ansatz dominant und eine zuverlässige Aussage über den Füllstand insbesondere unter Verwendung des optimierten Berechnungsalgorithmus ist nicht mehr gewährleistet. Daher wird in diesem Fall der Berechnungsalgorithmus mit einer festen vorgegebenen Phase angewendet, z.B. 15°, also mit der maximalen Phasendifferenz, die allein durch den Füllstand möglich ist. Alternativ wird ein zweiter Berechnungsalgorithmus verwendet, der speziell auf die Abhängigkeit vom Ansatz eingeht, bzw. den Auswirkungen des Ansatzes weitgehendst entgeht. Alternativ kann auch eine Warnung ausgegeben werden, dass eine manuelle Beseitigung des Ansatzes erforderlich ist.

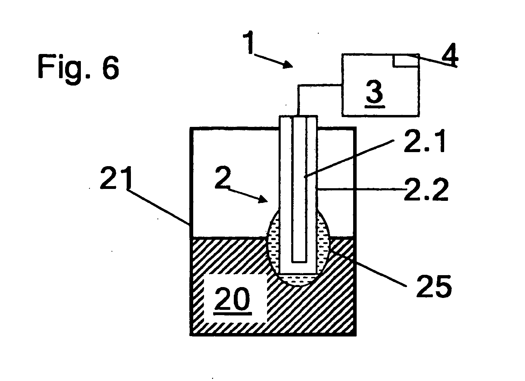

Die Fig. 6 zeigt schematisch die Messung einer Referenzzuordnung zwischen einem einstellbaren Füllstandswert und dem dabei bestimmten Kapazitätswert bei der Fertigung des Messgerätes 1. Die Sondeneinheit 2 besteht hier aus einem eigentlichen Sondenstab 2.1 und einer sie umgebenden Isolierung 2.2. Der Sondenstab 2.1 wird von der Regel-/Auswerteeinheit 3 mit einer elektrischen Wechselspannung beaufschlagt. Die Sondeneinheit 2 ist in dem Abgleichsbehälter 21 eingebracht. Der Füllstand des Abgleichsmediums 20 wird dann auf mindestens einen vorgebbaren Wert eingestellt und der dabei bestimmte Kapazitätswert wird dann mit dem Füllstandwert in der Speichereinheit 4, die hier Teil der Regel-/Auswerteeinheit 3 ist, abgelegt. Das Abgleichsmedium 20 zeichnet sich dadurch aus, dass die Leitfähigkeit $\sigma$ innerhalb des vorgegebenen Leitfähigkeitsbereichs liegt, also innerhalb des Bereichs, in welchem die Leitfähigkeit keinen oder nur kaum Einfluss auf die gemessene Kapazität hat. In der Abbildung ist weiterhin schematisch ein Ansatz 25 an der Sondeneinheit 2 dargestellt. Bei Ansatz 25 handelt es sich üblicherweise um das Medium 10, welches anhaftet und ggf. teilweise antrocknet. Je nach Beschaffenheit des Mediums 10 kann dieses an der Sondeneinheit 2 anhaften. Ansatz tritt dann auf, wenn nach Absinken des Füllstandes das Medium 10 an der Sondeneinheit 2 hängt und z.B. antrocknet. Ein solcher Ansatz 25 wirkt dann ähnlich einer Metallhülle, die über die Sondeneinheit 2 gezogen wird. Dadurch wird die Sondeneinheit 2 quasi abgeschirmt und es kann sogar dazu kommen, dass der Füllstand keine Kapazitätsänderung mehr hervorrufen kann. Deshalb ist Ansatz 25 eine sehr wichtige Prozessbedingung, die vor allem während der Änderung des Füllstandes, in Abhängigkeit von der Temperatur oder auch der Zeit, über welcher der Ansatz an der Sonde besteht, Änderungen unterworfen ist.

Bezugszeichenliste

1      Vorrichtung

2      Sondeneinheit

2.1      Sondenstab

2.2      Sondenisolation

3      Regel-/Auswerteeinheit

4      Speichereinheit

10      Medium

11      Behälter

20      Abgleichsmedium

21      Abgleichsbehälter

25      Ansatz

**Patentansprüche**

1. Verfahren zum fertigungsseitigen Abgleichen eines Messgerätes (1) zur kapazitiven Füllstandsmessung eines Mediums (10),
   wobei mindestens eine Sondeneinheit (2) des Messgerätes (1) mit einem elektrischen Ansteuersignal angesteuert wird, bei welchem es sich um eine elektrische Wechselspannung mit einer vorgebbaren Frequenz handelt, **dadurch gekennzeichnet,**
   **dass** in Abhängigkeit von der Frequenz des Ansteuersignals ein Leitfähigkeitsbereich bestimmt wird, innerhalb dessen die Füllstandsmessung im Wesentlichen unabhängig von einer Änderung der elektrischen Leitfähigkeit ($\sigma$) des Mediums (10) ist,
   **dass** für den Leitfähigkeitsbereich mindestens eine erste Referenzzuordnung zwischen einem vorgebbaren ersten Füllstandswert und einem zum ersten Füllstandswert gehörigen ersten Kapazitätswert erzeugt wird,
   und
   **dass** die erste Referenzzuordnung zwischen dem ersten Füllstandswert und dem ersten Kapazitätswert abgelegt wird.

2. Verfahren nach Anspruch 1,

**dadurch gekennzeichnet,**
**dass** mindestens eine Referenzzuordnung zwischen einem vorgegebenen Füllstandswert und einem zu dem Füllstandswert gehörigen Kapazitätswert dadurch erzeugt wird,
**dass** ein Abgleichsmedium (20) derartig gewählt oder eingestellt wird, dass die elektrische Leitfähigkeit ($\sigma$) des Abgleichsmediums (20) innerhalb des bestimmten Leitfähigkeitsbereichs liegt,
**dass** in einem Abgleichsbehälter (21) der Füllstandswert mit dem Abgleichsmediums (20) eingestellt wird, und
**dass** bei dem eingestellten Füllstandswert mit dem Messgerät (1) der Kapazitätswert bestimmt wird.

3. Verfahren nach Anspruch 1,
**dadurch gekennzeichnet,**
**dass** mindestens eine Referenzzuordnung zwischen einem vorgegebenen Füllstandswert und einem zu dem Füllstandswert gehörigen Kapazitätswert dadurch erzeugt wird,
**dass** der Kapazitätswert berechnet wird, welcher dem Füllstandwert des Mediums (10) zugeordnet ist.

4. Verfahren nach Anspruch 1,
**dadurch gekennzeichnet,**
**dass** mindestens eine Referenzzuordnung zwischen einem vorgegebenen Füllstandswert und einem zu dem Füllstandswert gehörigen Kapazitätswert dadurch erzeugt wird,
**dass** aus berechneten und/oder bestimmten Zuordnungen zwischen Füllstandswerten und Kapazitätswerten der Kapazitätswert entnommen wird, welcher dem Füllstandswert zugeordnet ist.

**Claims**

1. Method for the production-based adjustment of a measuring device (1) for the capacitance level measurement of a medium (10),
wherein at least one probe unit (2) of the measuring device (1) is controlled by an electrical control signal, said signal being an electrical A/C voltage with a predefinable frequency,
**characterized in that**
depending on the frequency of the control signal, a conductivity range is determined within which the level measurement is primarily independent of a change in the electrical conductivity ($\sigma$) of the medium (10);
for the conductivity range, a first reference assignment, at least, is created between a predefinable first level value and a first capacitance value pertaining to the first level value;
and
the first reference assignment is made between the first level value and the first capacitance value.

2. Method as claimed in Claim 1,
**characterized in that**
at least one reference assignment is created between a predefinable level value and a capacitance value pertaining to the level value by selecting and setting an adjustment medium (20) in such a way that the electrical conductivity ($\sigma$) of the adjustment medium (20) is within the specific conductivity range;
by setting the level value with the adjustment medium (20) in an adjustment container (21);
and
by determining the capacitance value with the measuring device (1) at the set level value.

3. Method as claimed in Claim 1,
**characterized in that**
at least one reference assignment is created between a predefinable level value and a capacitance value pertaining to the level value by calculating the capacitance value which is assigned to the level value of the medium (10).

4. Method as claimed in Claim 1,
**characterized in that**
at least one reference assignment is created between a predefinable level value and a capacitance value pertaining to the level value by taking the capacitance value - which is assigned to the level value - from calculated and/or determined assignments between level values and capacitance values.

**Revendications**

1. Procédé destiné à l'étalonnage côté fabrication d'un appareil de mesure (1) destiné à la mesure de niveau capacitive d'un produit (10),

   pour lequel au moins une unité de sonde (2) de l'appareil de mesure (1) est commandée ave un signal de commande électrique, concernant lequel il s'agit d'une tension électrique alternative d'une fréquence prédéfinissable,
   **caractérisé en ce**

   **qu'**en fonction de la fréquence du signal de commande est déterminée une plage de conductivité, au sein de laquelle la mesure de niveau est pour l'essentiel indépendante de la conductivité électrique ($\square$) du produit (10),

   **que** pour la plage de conductivité est générée au moins une première affectation de référence entre une première valeur de niveau prédéfinissable et une première valeur de capacité associée à la première valeur de niveau, et

   **que** la première affectation de référence entre la première valeur de niveau et la première valeur de capacité est enregistrée.

2. Procédé selon la revendication 1,
   **caractérisé en ce**

   **qu'**au moins une affectation de référence est générée entre une valeur de niveau prédéfinie et un valeur de capacité associée à la valeur de niveau,

   en ce qu'un produit d'étalonnage (20) est sélectionné ou réglé de telle manière que la conductivité électrique ($\square$) du produit d'étalonnage (20) se situe dans la plage de conductivité déterminée,

   en ce que la valeur de niveau est réglée dans un réservoir d'étalonnage (21) avec le produit d'étalonnage (20), et

   en ce que la valeur de capacité est déterminée avec l'appareil de mesure (1 ) pour la valeur de niveau réglée.

3. Procédé selon la revendication 1,
   **caractérisé en ce**

   **qu'**au moins une affectation de référence est générée entre une valeur de niveau prédéfinie et un valeur de capacité associée à la valeur de niveau,
   **caractérisé en ce**

   **que** la valeur de capacité est calculée, laquelle est affectée à la valeur de niveau du produit (10).

4. Procédé selon la revendication 1,
   **caractérisé en ce**

   **qu'**au moins une affectation de référence est générée entre une valeur de niveau prédéfinie et un valeur de capacité associée à la valeur de niveau,
   **caractérisé en ce**

   **qu'**à partir des affectations calculées et/ou déterminées entre les valeurs de niveau et les valeurs de capacité est prélevée la valeur de capacité, laquelle est affectée à la valeur de niveau.

Fig. 1

Fig. 2

# Fig. 3

Fig. 4

# Fig. 5

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10157762 A1
- DE 10161069 A1
- US 5245873 A

- DE 10161069
- DE 1275777
- DE 102004008125